# EUROPEAN PATENT SPECIFICATION

(11) **EP 3 022 885 B1**
(45) Date of publication and mention of the grant of the patent: **25.12.2019**
(21) Application number: 14752464.9
(22) Date of filing: 18.07.2014
(51) Int. Cl.: G06F 21/10, G06Q 50/18, H04L 29/06

(54) **GENERATING AND PROVIDING AN AUTHORIZATION INDICATION IN RELATION TO A MEDIA CONTENT ITEM**
ERSTELLUNG UND BEREITSTELLUNG EINER BERECHTIGUNGSANZEIGE IN BEZUG AUF EIN MEDIENINHALTSELEMENT
GÉNÉRATION ET FOURNITURE D'INDICATION D'AUTORISATION RELATIVEMENT À UN ÉLÉMENT DE CONTENU MULTIMÉDIA

(30) Priority: 18.07.2013 US 201361847725 P; 01.10.2013 US 201314043163
(43) Date of publication of application: 25.05.2016
(73) Proprietor: Google LLC, Mountain View, CA 94043 (US)
(72) Inventor: WEICH, Thomas, CH-8002 Zurich (CH); ROSENSTEIN, David E., Mountain View, California 94043 (US); BETEILLE, Fred, Mountain View, California 94043 (US); KALISCHER, Gideon, Mountain View, California 94043 (US); WALKER, Elliott, Mountain View, California 94043 (US)
(74) Representative: Grant, David Michael
(86) International application number: PCT/US2014/047308
(87) International publication number: WO 2015/010095

(56) References cited:
- US-A1- 2004 054 750
- US-A1- 2013 097 625
- US-B1- 8 094 872

## Description

### TECHNICAL FIELD

Aspects and implementations of the present disclosure relate to data processing, and more specifically, to generating and providing an authorization indication in relation to a media content item.

### BACKGROUND

Audio and video content can be stored on data servers and provided to users for listening/viewing over the Internet. Applications for supporting the listening/viewing of such audio and video content may be browser-based, or may run independently of a browser. US 8 094 872 B1 discloses a method and a system for generating and comparing fingerprints for videos in a video library; US 2013/097625 A1 discloses a system and method for identification of ownership to media objects through analysis of semantic information in the media objects.

### SUMMARY

The following presents a simplified summary of various aspects of this disclosure in order to provide a basic understanding of such aspects. This summary is not an extensive overview of all contemplated aspects, and is intended to neither identify key or critical elements nor delineate the scope of such aspects. Its purpose is to present some concepts of this disclosure in a simplified form as a prelude to the more detailed description that is presented later.

In an aspect of the present disclosure, a processing device receives, from a first user of a media sharing service, a first media content item and an authorization token, in response to receiving the first media content item, determining one or more similarities between, the first media content item and a second media content item stored in a media content store of the media sharing service, wherein the second media content item includes an authorization indication; in response to identifying similarities between the first media content item and the second media content item, analyzing the authorization token to determine whether presentation of the first media content item in a media channel of the first user is consistent with the authorization indication; and in response to determining that presentation of the first media content item in a media channel of the first user is consistent with the authorization indication, providing the first media content item for presentation in the media channel associated with the first user.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
Figure 1 depicts an illustrative system architecture, in accordance with one implementation of the present disclosure.
Figure 2 depicts a flow diagram of aspects of a method for generating and providing an authorization indication in relation to a media content item.
Figure 3 depicts an exemplary scenario in which an authorization indication is generated and provided in relation to a media content item, in accordance with one implementation of the present disclosure.
Figure 4 depicts another exemplary scenario in which an authorization indication is generated and provided in relation to a media content item, in accordance with one implementation of the present disclosure.
Figure 5 depicts a block diagram of an illustrative computer system operating in accordance with aspects and implementations of the present disclosure.

### DETAILED DESCRIPTION

Aspects and implementations of the present disclosure are directed to generating and providing an authorization indication in relation to a media content item. The systems and methods disclosed can be applied to media content such as audio and/or video content, images, and/or any other content that can be collected and/or disseminated such as via a media sharing service or website. More particularly, it can be appreciated that it can be advantageous for media content creators/owners (e.g., users or entities which create or otherwise own the rights to media content items such as video clips, audio clips, image files, etc.) to provide licenses (which may vary in degree and/or scope) to other users/entities who may wish to provide such media content items in various contexts. For example, a user producing a video clip may wish to incorporate such a media content item (e.g., a song) created/owned by another entity as a soundtrack to the video clip. By way of further example, a sport's team may wish to present video highlights or clips of a game in which the team participated (the rights to which are owned, for example, by a broadcast company or sports league) on a video webpage or homepage (also referred to as a 'channel') that is dedicated to media content associated with the team.

While current technologies can enable the identification of instances where media content provided by one user (such as to a media content sharing service/website) may actually be owned by another entity/user, such technologies do not enable or otherwise account for scenarios in which a content creator/owner wishes to provide authorization to a particular user to provide one or more of their (i.e., the media content owner/creator's) media content items (such as to a media content sharing service). Accordingly, described herein in various implementations are technologies that enable the generation and provision of authorization indications which can be associated with particular media content items and particular users. Such authorization indications (which can, for example, correspond to associations between a user and a media content item, or metadata and/or secure tokens that can be embedded within or otherwise associated with such media content items) can enable a media content sharing service to distinguish between an authorized presentation by one user of a media content item whose rights are owned by another user, and the unauthorized presentation by one user of a media content item whose rights are owned by another user. For example, upon determining that a user has provided (e.g., uploaded to a media content sharing service) a media content item that is owned or otherwise controlled by another entity, a further determination can be made with respect to whether (or not) an authorization indication (e.g., an association between the user and the provided media content item) has been provided or otherwise confirmed by the content owner.

Moreover, in certain implementations, such authorization(s) can be provided in relation to one or more parameters which can further define the scope of the authorization provided by the creator/owner of the media content to the user wishing to provide the media content (e.g., parameters with respect to the geographic area, timeframe, duration, context, etc., within which the authorization is limited/restricted). In doing so, content owners/creators can more effectively provide authorization to certain users under certain circumstances to provide or otherwise utilize their (i.e., the content creator/owner's) content, while still precluding/preventing unauthorized utilization of such content, such as by unauthorized users and/or under unauthorized circumstances.

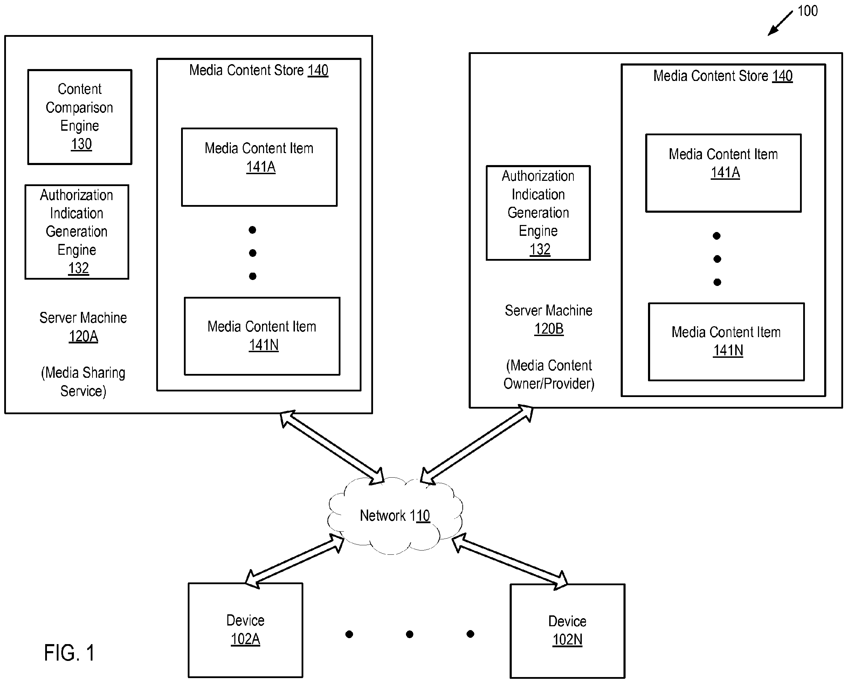

Figure 1 depicts an illustrative system architecture 100, in accordance with one implementation of the present disclosure. The system architecture 100 includes user devices 102A-102N and server machines 120A and120B. These various elements or components can be connected to one another via network 110, which can be a public network (e.g., the Internet), a private network (e.g., a local area network (LAN) or wide area network (WAN)), or a combination thereof.

User devices 102A-102N can be wireless terminals (e.g., smartphones, etc.), personal computers (PC), laptops, tablet computers, or any other computing or communication devices. The user devices 102A-102N may run an operating system (OS) that manages hardware and software of the user devices 102A-102N. Various applications, such as mobile applications ('apps'), web browsers, etc. (not shown) may run on the client machines (e.g., on the OS of the client machines). Such applications can, for example, enable a user to capture media content (e.g., an audio clip, a video clip, etc.), provide media content (e.g., upload media content to a central server and/or transmit it to another user), receive media content (e.g., via network 110), and/or view, display, or otherwise present media content (e.g.,. playing a video, listening to a song, etc.), such as via the user device 102. The user devices 102A-102N can be geographically distributed anywhere throughout the world.

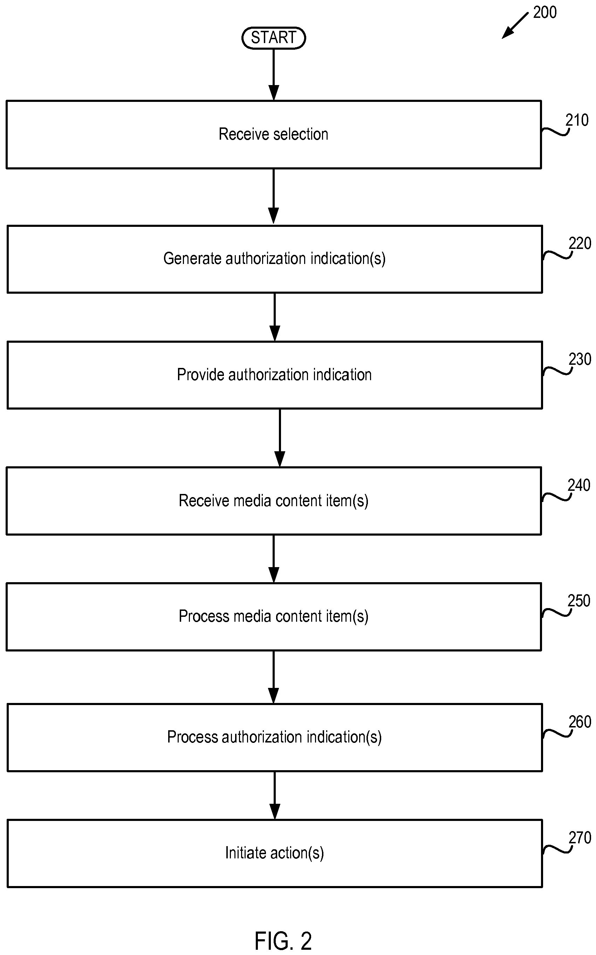

Server machine 120A and 120B can be rackmount servers, router computers, personal computers, portable digital assistants, mobile phones, laptop computers, tablet computers, cameras, video cameras, netbooks, desktop computers, media centers, and/or any combination of the above, or any other such computing device(s) capable of implementing the various features described herein. In various implementations, server machine 120A can correspond to a media sharing service (also referred to as a content hosting service) such as a service that enables users to upload audio, video, and/or other types of media content, such as in order to enable other users to subsequently view such content, e.g., over network 110 such as the internet. Moreover, in certain implementations, server machine 120B can correspond to a device/machine that is controlled/maintained by a media content owner/provider, such as an entity that owns or manages the dissemination of media content items (and/or the rights to disseminate such media content items). It should be noted that, in certain implementations, server machines 120A and 120B can include one or more similar, comparable, and/or identical components such as authorization indication generation engine 132 and/or media content store 140. The components can be combined together or separated in further components, according to a particular implementation. It should be noted that in some implementations, various components of each/either of server machines 120A and 120B may run on separate machines. Moreover, some operations of certain of the components are described in more detail below with respect to Figure 2.

Media content store 140 can be hosted by one or more storage devices, such as main memory, magnetic or optical storage based disks, tapes or hard drives, NAS, SAN, and so forth. In some implementations, media content store 140 can be a network-attached file server, while in other implementations media content store 140 can be some other type of persistent storage such as an object-oriented database, a relational database, and so forth, that may be hosted by the server machines 120A and/or 120B or one or more different machines coupled to the server machine(s) via the network 110, while in yet other implementations media content store 140 may be a database that is hosted by another entity and made accessible to the server machine(s).

Media content store 140 can include media content items 141A-141N. In certain implementations, media content items 141A-141N can correspond to media content itself (e.g., audio clips, video clips, images, etc.) and/or fingerprints of such media content (e.g., quantitative data derived from features such as color, intensity, frequency, etc.), as well as data structures to associate the media content items with their respective fingerprints (e.g., a table in which each row stores an identifier of an audio/video segment and fingerprint data for that audio/video segment, etc.). For example, with respect to media content store 140 of server machine 120A, upon receiving a media content item, such as from a user device 102, using content comparison engine 130 the received media content item can be compared to and/or otherwise analyzed in light of the media content items in the media content store 140. In doing so one or more matches and/or similarities between the received media content item and those media content items stored in media content store 140 can be identified.

Moreover, in certain implementations, one or more of server machines 120A and/or 120B can include an authorization indication generation engine 132. In one implementation, authorization indication generation engine 132 can operate in conjunction with server machine(s) 120A and/or 120B, such as in order to generate and/or provide an association between a media content item (such as a media content item owned/controlled by one entity) and one or more users that have been authorized (such as by the owner of the media content item) to provide (e.g., upload) such a media content item, such as to a media sharing service. For example, upon determining that a media content item that is owned or otherwise controlled by another entity has been provided to a media sharing service (e.g., based on a match and/or similarity identified by comparing the newly received media content item with previously stored media content items, as referenced above), a further determination can be made with respect to whether (or not) an authorization indication (e.g., an association between the user and the provided media content item) has been provided, such as by the content owner to the user for the particular media content item. It should be noted that, in various implementations, such an association can be stored/maintained at a database or directory at server machine 120A (e.g., a media sharing service), while in other implementations such an association can be stored/maintained at a database or directory at server machine 120B (e.g., a media content owner/provider) and accessed/queried upon determining that a media content item that is owned or otherwise controlled by another entity has been provided to a media sharing service, as described above.

In another implementation, authorization indication generation engine 132 can operate in conjunction with server machine(s) 120A and/or 120B, such as in order to generate and/or provide a notification, data, and/or metadata that can, for example, be embedded or otherwise associated with a media content item, such as a media content item stored in media content store 140 of server machine 120A. Such an notification can serve as an indication from the content owner that a particular content item stored in media content store 140 of server machine 120A (which may have been provided by the content owner) has been authorized to be provided by/in relation to one or more users (such as by authorizing one or more users to present or otherwise embed such a video content item within a page, document or 'channel' associated with the authorized user).

In yet another implementation, authorization indication generation engine 132 can operate in conjunction with server machine(s) 120A and/or 120B, such as in order to generate and/or provide an electronic identifier such as a 'token' which can, for example, be embedded or otherwise provided in conjunction with a media content item. Such an identifier/token can indicate that a particular content item (such as a media content item provided by a user device 102) (or a portion thereof, such as in the case of a larger video that incorporates a video clip owned by the content creator/owner) has been provided with authorization of the owner of such a media content item, as described herein.

Figure 2 depicts a flow diagram of aspects of a method 200 for generating and providing an authorization indication in relation to a media content item. The method is performed by processing logic that may comprise hardware (circuitry, dedicated logic, etc.), software (such as is run on a general purpose computer system or a dedicated machine), or a combination of both. In one implementation, the method is performed by server machine 120B of Figure 1, while in another implementation, the method is performed by server machine 120A of Figure 1, while yet other implementations, one or more blocks of Figure 2 may be performed by another machine. For example, in various alternative implementations, the method can be performed at a user device 102 (e.g., the method or various aspects thereof can be performed locally at the device 102 rather than in communication with a server such as server machine 120).

For simplicity of explanation, methods are depicted and described as a series of acts. However, acts in accordance with this disclosure can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be appreciated that the methods disclosed in this specification are capable of being stored on an article of manufacture to facilitate transporting and transferring such methods to computing devices. The term article of manufacture, as used herein, is intended to encompass a computer program accessible from any computer-readable device or storage media.

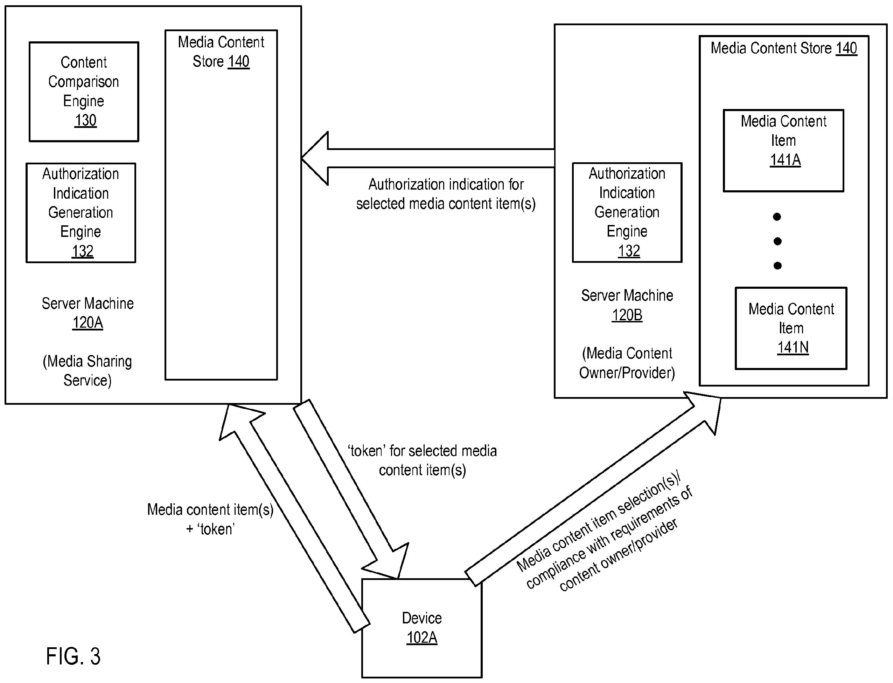

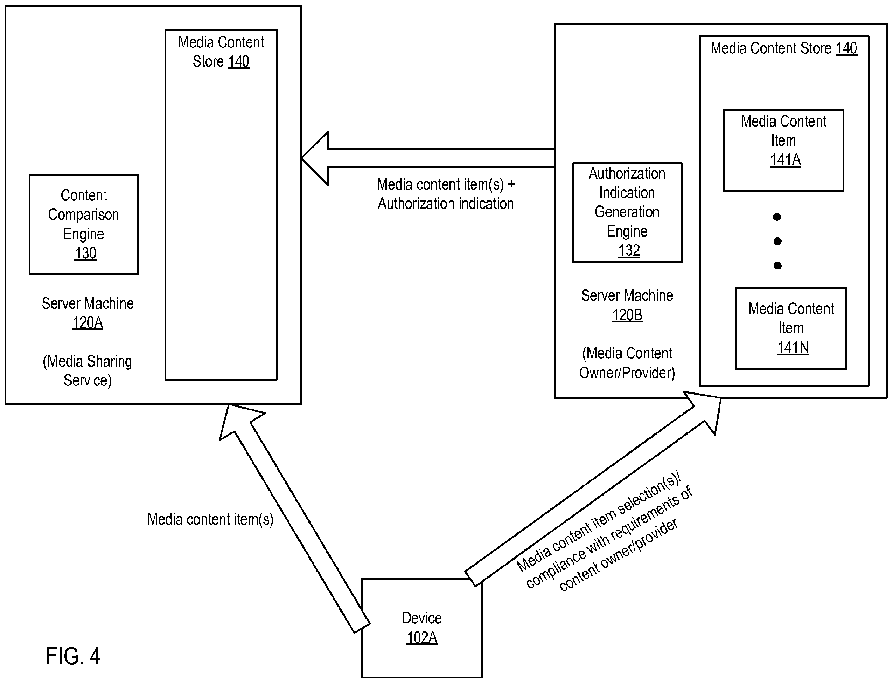

At block 210, a selection of a media content item can be received. In certain implementations, such a selection can be received from a user device 102 which can, for example, correspond to a first entity/user. Moreover, in certain implementations, the referenced media content item can be associated with a second entity, such as a media content owner/provider. By way of illustration, a user may select a media content item (e.g., an audio clip, video clip, digital image, etc.) created and/or owned by another entity/user (e.g., a media content owner/provider) that the user wishes to obtain a license for, such as a license authorizing the user to present such a media content item and/or to otherwise incorporate aspects of such a media content item (e.g., portions or segments thereof) into other media content item, such as those provided by the first user. For example, Figures 3 and 4 depict various exemplary scenarios whereby a user (device 102A) can interact with server machine 120B (e.g., a website maintained by a media content owner/provider) in order to provide a selection of one or more media content items that the user wishes to obtain authorization for in order to provide to a media sharing service (as well as to provide compliance with the requirements/directives of the content owner/provider, such as paying a fee dictated by the content owner/provider in order to obtain such authorization). In one aspect, block 210 is performed by authorization indication generation engine 132.

At block 220, an authorization indication can be generated. In certain implementations, such an authorization indication can be generated in relation to a media content item (such as the media content item selected at block 210). For example, upon determining that a user (i.e., the user/entity that selected the media content item at block 210) has complied with one or more requirements/directives dictated by the owner/provider of the media content item (e.g., paying a fee dictated by the content owner/provider) and thus received authorization from the media content owner, an authorization indication (e.g., an association between the media content item and the authorized user, metadata that can be embedded with the media content item, a token, etc.) can be generated. In certain implementations, such an authorization indication can be generated with respect to a user/entity, such as the user/entity that provided the selection at block 210. As described herein, such an authorization indication can reflect, for example, that the content owner/provider has provided a license or other such rights or permissions, such as to a particular user, in relation to a particular media content item (e.g., to provide such a media content item to/in relation to a media sharing service). By way of illustration, as shown in Figure 3, authorization indication generation engine 132 of server machine 120B can generate an authorization indication (e.g., a notification or other such indication) that reflects that the content owner/provider has provided a license, such as to a particular user, in relation to a particular media content item. In one aspect, block 220 is performed by authorization indication generation engine 132.

Moreover, in certain implementations an authorization token can be generated. For example, as shown in Figure 4, upon determining that a user (i.e., the user/entity that selected the media content item at block 210) has complied with one or more requirements/directives dictated by the owner/provider of the media content item, an authorization indication (e.g., one or more 'tokens' or other such identifiers that correspond to the provided authorization) can be generated by authorization indication generation engine 132 of server machine 102B and such an authorization indication can be associated with the selected media content item 141.

At block 230, an authorization indication (such as the authorization indication generated at block 220) can be provided. In certain implementations, the authorization indication can be provided to an authorization token generator. Moreover, in certain implementations, such an authorization token generator can include or otherwise be associated with a media content store. For example, as shown in Figure 3, having generated (such as at server machine 120B, as described at block 220) an authorization indication with respect to one or more media content items (reflecting, for example, that the content owner/provider has authorized another entity/user to provide such content, such as via a media sharing service), such an authorization indication can be provided to a media sharing service (e.g., server machine 120A). Such a media sharing service (e.g., server machine 102A as shown in Figure 3) can include a token generator (e.g., authorization indication generation engine 132 of server machine 102A) that can be configured to generate tokens or other such identifiers. Such tokens can serve as secure identifiers that, when provided, for example, in association with a media content item (such as upon submission of a media content item to a media sharing service), can indicate that the associated media content item is being provided with authorization from the original owner/provider of the media content. Accordingly, as is also shown in Figure 3, such a 'token' can be provided by the media sharing service (e.g., server machine 120A) to the user (e.g., device 102) with respect to which the authorization indication was generated. In one aspect, block 230 is performed by authorization indication generation engine 132.

Additionally, in certain implementations, a media content item (such as the media content item selected at block 210) can be provided, in conjunction with the authorization indication, to a media content store, such as a media content store associated with a media sharing service (e.g., media content store 140 of serer machine 120A). For example, as shown in Figure 4, upon generating an authorization indication with respect to a particular media content item (such as by the media content owner/provider, such as server machine 120B), such an authorization can be provided, together with the media content item itself, to a media sharing service (e.g., server machine 120A).

At block 240, a media content item can be received. In certain implementations, such a media content item can be received at a media content store (such as the media content store 140 of server machine 120A) and/or in conjunction with the authorization indication. For example, a user (such as the user with respect to which an authorization indication was generated, such as at block 220) can provide (e.g., upload) a media content item (e.g., audio clip, video clip, digital image, etc.) to a media sharing site/service (e.g., server machine 120A). By way of illustration, as shown in Figure 3, having received an authorization indication such as a 'token' (e.g., from server machine 120A), the user can subsequently provide (e.g., upload) a media content item to a media sharing service (e.g., server 102A) together with the received token. By way of further illustration, as shown in Figure 4, the user can provide (e.g., upload) a media content item to a media sharing service (e.g., server 102A). In one aspect, block 240 is performed by content comparison engine 130.

Moreover, in certain implementations the referenced media content item(s) (e.g., those media content items provided by the user to a media sharing service) can include one or more aspects of the first media content item (such as the media content item selected at block 210). For example, the media content item provided by the user can include one or more segments or sections of the media content item with respect to which an authorization indication was generated (such as at block 220). By way of further example, such a media content item provided by the user can be similar, comparable and/or identical to the media content item with respect to which an authorization indication was generated.

At block 250, the media content item (such as that received at block 240) can be processed. In doing so, one or more similarities between the received media content item and one or more of the media content items contained within the media content store (e.g., media content store 140 of server machine 120A) can be determined. For example, one or more content comparison techniques can be utilized to compare the referenced media content item with one or more other media content items, such as in order to identify similarities between the media content item and one or more of the other media content items, such as in a manner known to those of ordinary skill in the art. By way of illustration, as shown in Figures 3 and 4, upon receiving a media content item from a user (e.g., from device 102A), content comparison engine 130 can be utilized to identify one or more similarities between the received media content item and one or more of the media content items contained within the media content store (e.g., media content store 140 of server machine 120A). In one aspect, block 250 is performed by content comparison engine 130.

Moreover, in certain implementations an association between the received media content item and one or more of the media content items contained within the media content store can be provided by and/or received from the user. That is, for example, server machine 120A (e.g., a media sharing service) can be configured to request and/or receive an association from the user, such as an association indicating that the media content item being provided by the user corresponds to one or more of the media content items contained within the media content store. In doing so, in lieu of and/or in addition to determining similarities/matches between a received media content item and media content items contained within the media content store, the user can preemptively identify the previously stored media content items to which the received media content item (provided by the user) corresponds, thereby enabling a determination of the authorization status of such a media content item, such as in the manner described herein.

At block 260, the authorization indication (such as that generated at block 220) can be processed. In doing so, an authorization status of a media content item (such as that received at block 240) can be determined. In certain implementations, such an authorization status can be determined based on a determination of one or more similarities between the media content item (such as the media content item received at block 240) and one or more media content items present within the media content store. For example, having determined (such as at block 250) that a media content item (such as the media content item received at block 240) is similar to one or more media content items (e.g., at least to a certain degree/threshold), the authorization indication associated with such a media content item can be processed in order to determine an authorization status of such a media content item (e.g., authorized or unauthorized). In one aspect, block 260 is performed by authorization indication generation engine 132.

By way of illustration, as shown in Figure 3, upon receiving a media content item (together with an authorization indication or 'token') from a user (such as at block 240) and identifying (such as at block 250) one or more similarities between the received media content item and one or more of the other media content items (such as those stored in media content store 140 of server machine 120A) the authorization indication or 'token' associated with the received media content item can be analyzed in order to determine whether (or not) the providing of the media content item by the user to the media sharing service is consistent with the authorization indication (and/or whether the presentation/viewing of such a media content item is consistent with the authorization indication). By way of further illustration, as shown in Figure 4, upon receiving a media content item from a user (such as at block 240) and identifying (such as at block 250) one or more similarities between the received media content item and one or more of the other media content items (such as those stored in media content store 140 of server machine 120A) the authorization indication or 'token' associated with such similar media content item(s) stored in the media content store140 of a media sharing service (e.g., server machine 120A) can be analyzed in order to determine whether (or not) the providing of the media content item by the user to the media sharing service is consistent with the authorization indication (and/or whether the presentation/viewing of such a media content item is consistent with the authorization indication).

Moreover, in certain implementations one or more parameters of the authorization indication can be processed to determine an authorization status of a media content item (such as the media content item received at block 240). That is, it can be appreciated that while certain authorization indications can be relatively absolute or all-encompassing (in that they indicate that the associated media content item can be provided by the entity/user with respect to which the authorization indication was generated), other authorization indications can be generated with respect to a particular entity/user in accordance with one or more parameters. Examples of such parameters include but are not limited to: geographic parameters (e.g., one or more geographical areas within which the media content item is authorized for presentation/viewing), chronological/time-based parameters (e.g., a date, time, date range, etc., within which the media content item is authorized for presentation/viewing), and/or contextual parameters (e.g., a setting, context, etc., within which the media content item is authorized for presentation/viewing).

By way of illustration, a particular authorization indication (as generated with respect to a particular media content item and a particular user) can include one or more parameters that can define the particular geographic areas, regions, etc. where such a media content item is (or is not) authorized for presentation by the user. For example, such authorization may be provided for a user to display/present such media content items in one country (e.g., Japan) but not in other countries. Accordingly, having received a media content item (together with an authorization indication or 'token') from a user (such as at block 240) and identified similarities between the received media content item and one or more of the other media content items (such as at block 250), the authorization indication or 'token' associated with the received media content item can be analyzed in order to determine (a) whether (or not) the providing of the media content item by the user to the media sharing service is consistent with the authorization indication (that is, whether the user is, in fact, authorized to provide such a media content item to a media sharing service) and/or (b) whether the presentation/viewing of such a media content item is consistent with the authorization indication. For example, upon determining that the authorization indication for a particular media content item is limited to a particular geographic area, the media sharing service (e.g., server machine 120A) can present or otherwise provide such a media content item to users within the authorized geographic are, while not making such media content items available for presentation to users determined to be in other geographic areas (which are not authorized by the authorization indication).

By way of further illustration, a particular authorization indication (as generated with respect to a particular media content item and a particular user) can include one or more chronological parameters that can define the particular dates, times, date ranges, etc. during which such a media content item is (or is not) authorized for presentation by the user. For example, such authorization may be provided for a user to display/present such media content items during a given date range (e.g., Jan. 1, 2012 - June 1, 2012) but not outside of such authorized dates. Accordingly, having received a media content item (together with an authorization indication or 'token') from a user (such as at block 240) and identified similarities between the received media content item and one or more of the other media content items (such as at block 250), the authorization indication or 'token' associated with the received media content item can be analyzed in order to determine (a) whether (or not) the providing of the media content item by the user to the media sharing service is consistent with the authorization indication (that is, whether the user is, in fact, authorized to provide such a media content item to a media sharing service) and/or (b) whether the presentation/viewing of such a media content item is consistent with the authorization indication. For example, upon determining that the authorization indication for a particular media content item is limited to a particular date range, the media sharing service (e.g., server machine 120A) can present or otherwise provide such a media content item to users within the authorized date range, while not making such media content items available for presentation to users outside of the authorized date range.

In yet other implementations, one or more durational parameters can be implemented, whereby authorization can be provided to a user to provide a particular media content item (or items) for a given time duration (e.g., for an aggregate amount of time, such as an aggregate amount of viewing time by users of the media sharing service). For example, authorization can be provided to a user to provide a particular media content item on a media sharing service for up to a certain amount of aggregate viewing/presentation time by users of the service (e.g., 20 hours) and/or up to a certain number of instances of viewing/presentation (and/or a certain number of unique instances of viewing/presentation) (e.g., 1000 views).

In another implementation, one or more contextual parameters can be implemented, whereby authorization can be provided to a user to provide a particular media content item (or items) within a specified setting or context. For example, authorization can be provided to a user to provide a particular media content item within a website/application of the media sharing service itself, but not to embed or otherwise incorporate such a media content item into another website or context. By way of further example, authorization can be provided for a user to provide a particular media content item within a context that does not enable users to provide comments, feedback, and/or ratings with respect to the media content item. By way of further example, authorization can be provided for a user to provide a particular media content item within a context that cannot be determined to be restricted or otherwise limited, such as by age (i.e., that no authorization is provided to the user to provide the media content item in a manner that can be classified as being restricted to a particular user segment, e.g., by including profanity, violence, etc., within the title, description, etc. associated with the media content item, by incorporating other media content that is restricted with the media content items for which the authorization was provided, etc.). As noted above, it should be understood that the referenced parameters are exemplary and that any number of additional parameters can be similarly implemented. Moreover, it should be understood that one or more combinations of parameters (e.g., geographic parameters and chronological parameters) can be employed together in relation to a particular media content item.

At block 270, one or more actions can be initiated. In certain implementations, such actions can be initiated with respect to a media content item (such as the media content item received at block 240). Moreover, in certain implementations, such actions can be initiated based on a determination that the authorization status of the second media content item is unauthorized. For example, upon determining (such as at block 260) that a media content item has been provided to a media sharing service in an unauthorized manner/context, such a media content item can be flagged or otherwise selected for further review, investigation, and/or removal from the service (if necessary). By way of further example, upon determining (such as at block 260) that a media content item has been provided to a media sharing service in an authorized manner/context, one or more monetization operations can be initiated. For example, being that the display/presentation of media content items (e.g., videos) can be monetized, for example, by providing advertisements concurrent with or otherwise in relation to the presentation of a particular media content item, among the terms that can accompany the authorization provided by a media content provider/owner to a user who wishes themselves to provide (such as on a media sharing service) media content items that are owned/controlled by the media content provider/owner, are those which dictate that some portion, percentage, amount, etc. of the revenue generated by the user through the presentation of the media content items is to be collected by/returned to the owner/provider of the media content (e.g., 50%). Accordingly, upon determining that media content items authorized by the media content owner have been provided (and monetized) by the user, one or more operations can be initiated with respect to the revenues generated from such instances, such as to attribute, distribute, etc., the appropriate revenue amounts back to the media content owner. It should be understood that the referenced actions are exemplary and that any number of other actions can be similarly implemented. In one aspect, block 270 is performed by authorization indication generation engine 132.

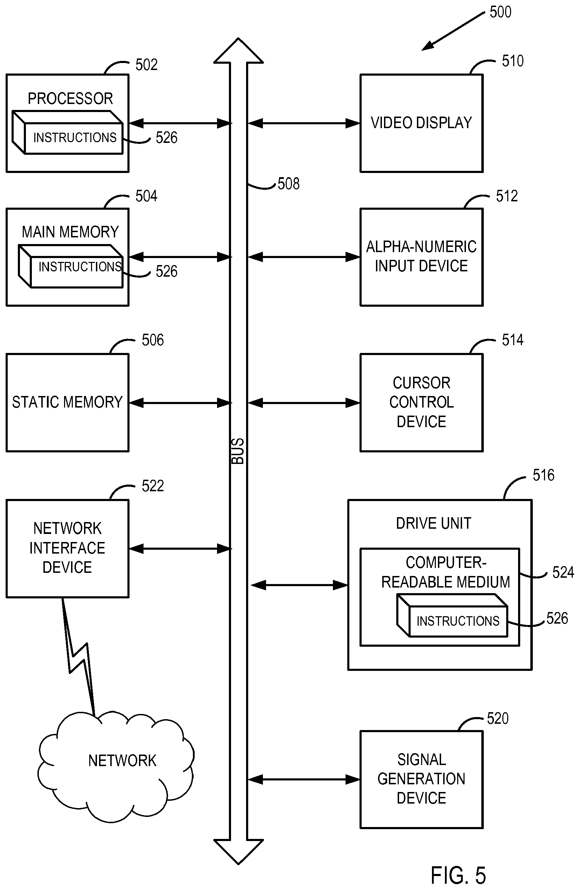

Figure 5 depicts an illustrative computer system within which a set of instructions, for causing the machine to perform any one or more of the methodologies discussed herein, may be executed. In alternative implementations, the machine may be connected (e.g., networked) to other machines in a LAN, an intranet, an extranet, or the Internet. The machine may operate in the capacity of a server machine in client-server network environment. The machine may be a personal computer (PC), a set-top box (STB), a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The exemplary computer system 500 includes a processing system (processor) 502, a main memory 504 (e.g., read-only memory (ROM), flash memory, dynamic random access memory (DRAM) such as synchronous DRAM (SDRAM)), a static memory 506 (e.g., flash memory, static random access memory (SRAM)), and a data storage device 516, which communicate with each other via a bus 508.

Processor 502 represents one or more general-purpose processing devices such as a microprocessor, central processing unit, or the like. More particularly, the processor 502 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 502 may also be one or more special-purpose processing devices such as an application specific integrated circuit (ASIC), a field programmable gate array (FPGA), a digital signal processor (DSP), network processor, or the like. The processor 502 is configured to execute instructions 526 for performing the operations and steps discussed herein.

The computer system 500 may further include a network interface device 522. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 520 (e.g., a speaker).

The data storage device 516 may include a computer-readable medium 524 on which is stored one or more sets of instructions 526 (e.g., instructions executed by collaboration manager 225, etc.) embodying any one or more of the methodologies or functions described herein. Instructions 526 may also reside, completely or at least partially, within the main memory 504 and/or within the processor 502 during execution thereof by the computer system 500, the main memory 504 and the processor 502 also constituting computer-readable media. Instructions 526 may further be transmitted or received over a network via the network interface device 522.

While the computer-readable storage medium 524 is shown in an exemplary embodiment to be a single medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present disclosure. The term "computer-readable storage medium" shall accordingly be taken to include, but not be limited to, solid-state memories, optical media, and magnetic media.

In the above description, numerous details are set forth. It will be apparent, however, to one of ordinary skill in the art having the benefit of this disclosure, that embodiments may be practiced without these specific details. In some instances, well-known structures and devices are shown in block diagram form, rather than in detail, in order to avoid obscuring the description.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing," "determining," "initiating," "comparing," "identifying," or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

Aspects and implementations of the disclosure also relate to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general purpose systems may be used with programs in accordance with the teachings herein, or it may prove convenient to construct a more specialized apparatus to perform the required method steps. The required structure for a variety of these systems will appear from the description below. In addition, the present disclosure is not described with reference to any particular programming language. It will be appreciated that a variety of programming languages may be used to implement the teachings of the disclosure as described herein.

It is to be understood that the above description is intended to be illustrative, and not restrictive. Many other embodiments will be apparent to those of skill in the art upon reading and understanding the above description. Moreover, the techniques described above could be applied to other types of data instead of, or in addition to, media clips (e.g., images, audio clips, textual documents, web pages, etc.). The scope of the disclosure should, therefore, be determined with reference to the appended claims.

## Claims

1. A computer-implemented method comprising:
receiving, from a first user of a media sharing service, a first media content item and an authorization token,
in response to receiving the first media content item, determining one or more similarities between the first media content item and a second media content item stored in a media content store of the media sharing service, wherein the second media content item includes an authorization indication;
in response to identifying similarities between the first media content item and the second media content item, analyzing the authorization token to determine whether presentation of the first media content item in a media channel of the first user is consistent with the authorization indication; and
in response to determining that presentation of the first media content item in a media channel of the first user is consistent with the authorization indication, providing the first media content item for presentation in the media channel associated with the first user.

2. The method of claim 1, wherein the authorization indication is generated using an authorization token generator.

3. The method of claim 2, wherein the authorization token generator comprises a media content store.

4. The method of claim 1, wherein analyzing the authorization token comprises processing one or more parameters of the authorization indication to determine an authorization status of the first media content item.

5. The method of claim 4, further comprising: based on a determination that the authorization status of the first media content item is unauthorized, initiating one or more actions with respect to the first media content item.

6. A system comprising:
a memory; and
a processing device, coupled to the memory, and configured to carry out a method according to any one of the preceding claims.

7. A computer readable medium having instructions stored thereon that, when executed by a processor, cause the processor to perform a method according to any one of claims 1 to 5.

## Patentansprüche

1. Computerimplementiertes Verfahren, umfassend:
Empfangen eines ersten Medieninhaltselements und eines Berechtigungstokens von einem ersten Benutzer eines Dienstes zur gemeinsamen Mediennutzung,
als Reaktion auf das Empfangen des ersten Medieninhaltselements erfolgendes Bestimmen von einer oder mehreren Ähnlichkeiten zwischen dem ersten Medieninhaltselement und einem zweiten Medieninhaltselement, das in einem Medieninhaltsspeicher des Dienstes zur gemeinsamen Mediennutzung gespeichert ist, wobei das zweite Medieninhaltselement eine Berechtigungsangabe einschließt;
als Reaktion auf das Identifizieren von Ähnlichkeiten zwischen dem ersten Medieninhaltselement und dem zweiten Medieninhaltselement erfolgendes Analysieren des Berechtigungstokens, um zu bestimmen, ob die Präsentation des ersten Medieninhaltselements in einem Medienkanal des ersten Benutzers mit der Berechtigungsangabe vereinbar ist; und
als Reaktion auf das Bestimmen, dass die Präsentation des ersten Medieninhaltselements in einem Medienkanal des ersten Benutzers mit der Berechtigungsangabe vereinbar ist, erfolgendes Bereitstellen des ersten Medieninhaltselements zur Präsentation in dem Medienkanal, der dem ersten Benutzer zugeordnet ist.

2. Verfahren nach Anspruch 1, worin die Berechtigungsangabe unter Verwendung eines Berechtigungstokenerzeugers erzeugt wird.

3. Verfahren nach Anspruch 2, worin der Berechtigungstokenerzeuger einen Medieninhaltsspeicher umfasst.

4. Verfahren nach Anspruch 1, worin das Analysieren des Berechtigungstokens umfasst: Verarbeiten von einem oder mehreren Parametern der Berechtigungsangabe, um einen Berechtigungsstatus des ersten Medieninhaltselements zu bestimmen.

5. Verfahren nach Anspruch 4, ferner umfassend: auf einer Bestimmung, dass der Berechtigungsstatus des ersten Medieninhaltselements nicht autorisiert ist, Auslösen einer oder mehrerer Aktionen in Bezug auf das erste Medieninhaltselement.

6. System, umfassend:
einen Speicher; und
eine Verarbeitungsvorrichtung, die mit dem Speicher gekoppelt und dafür konfiguriert ist, ein Verfahren nach einem der vorhergehenden Ansprüche auszuführen.

7. Computerlesbares Medium mit darauf gespeicherten Anweisungen, die, wenn sie durch einen Prozessor ausgeführt werden, den Prozessor veranlassen, ein Verfahren nach einem der Ansprüche 1 bis 5 durchzuführen.

## Revendications

1. Procédé mis en œuvre par ordinateur comprenant :
la réception, en provenance d'un premier utilisateur d'un service de partage de média, d'un premier élément de contenu de média et d'un jeton d'autorisation ;
en réponse à la réception du premier élément de contenu de média, la détermination d'une ou de plusieurs similarité(s) entre le premier élément de contenu de média et un second élément de contenu de média qui est stocké dans un moyen de stockage de contenus de média du service de partage de média, dans lequel le second élément de contenu de média inclut une indication d'autorisation ;
en réponse à l'identification de similarités entre le premier élément de contenu de média et le second élément de contenu de média, l'analyse du jeton d'autorisation de manière à déterminer si la présentation du premier élément de contenu de média dans un canal de média du premier utilisateur est cohérente avec l'indication d'autorisation ; et
en réponse à la détermination du fait que la présentation du premier élément de contenu de média dans un canal de média du premier utilisateur est cohérente avec l'indication d'autorisation, la fourniture du premier élément de contenu de média pour sa présentation dans le canal de média qui est associé au premier utilisateur.

2. Procédé selon la revendication 1, dans lequel l'indication d'autorisation est générée en utilisant un générateur de jetons d'autorisation.

3. Procédé selon la revendication 2, dans lequel le générateur de jetons d'autorisation comprend un moyen de stockage de contenus de média.

4. Procédé selon la revendication 1, dans lequel l'analyse du jeton d'autorisation comprend le traitement d'un ou de plusieurs paramètre(s) de l'indication d'autorisation de manière à déterminer un état d'autorisation du premier élément de contenu de média.

5. Procédé selon la revendication 4, comprenant en outre : sur la base de la détermination du fait que l'état d'autorisation du premier élément de contenu de média est non autorisé, l'initiation d'une ou de plusieurs action(s) en relation avec le premier élément de contenu de média.

6. Système comprenant :
une mémoire ; et
un dispositif de traitement, qui est couplé à la mémoire, et qui est configuré de manière à ce qu'il mette en œuvre un procédé selon l'une quelconque des revendications qui précèdent.

7. Support pouvant être lu par un ordinateur et comportant des instructions stockées en son sein qui, lorsqu'elles sont exécutées par un processeur, forcent le processeur à réaliser un procédé selon l'une quelconque des revendications 1 à 5.
